# EUROPÄISCHE PATENTANMELDUNG

(11) **EP 2 826 366 A1**
(43) Veröffentlichungstag der Anmeldung: **21.01.2015**
(21) Anmeldenummer: 13177116.4
(22) Anmeldetag: 18.07.2013
(51) Int. Cl.: A01M 7/00, A01B 79/00, A01C 23/00

(54) **Flüssigkeitsflächenausbringverfahren für fahrende Flüssigkeitsverteilvorrichtungen**

(71) Anmelder: Herbert Dammann GmbH, 21614 Buxtehude (DE)
(72) Erfinder: Dammann, Nadine, 21614 Buxtehude (DE); von Bargen, Frank, 21640 Bliedersdorf (DE)
(74) Vertreter: Hansen, Jochen

(57) **Zusammenfassung**

Die Erfindung betrifft ein Flüssigkeitsflächenausbringverfahren mit einer fahrenden Flüssigkeitsverteilvorrichtung, Feldspritze oder industrieller Spritzmaschine mit einer Vielzahl von nebeneinander an einem senkrecht zur Arbeitsrichtung vorgesehenen Gestänge angeordneten Düsenanordnungen, wobei die Düsenanordnungen ansteuerbar sind und eine zu überfahrende und zu besprühende Fläche mit einer Flüssigkeit besprühen, wobei der Fahrtzustand in Bezug auf Geradeaus- und Kurvenfahrt überwacht wird und die Ausbringmenge der einzelnen Düsenanordnungen anhand des Fahrtzustandes Geradeausfahrt und Kurvenfahrt eingestellt wird, wobei bei Detektion einer Geradeausfahrt keine Änderung der Ausbringmenge in Bezug auf den Fahrtzustand erfolgt und bei Detektion einer Kurvenfahrt eine Änderung der Ausbringmenge in Bezug auf den Fahrtzustand erfolgt, so dass die Ausbringmengen der Düsenanordnungen in Abhängigkeit des jeweiligen Düsenanordnungsanbringungsort-abhängigen Kurvenradius angepasst werden, so dass die Ausbringmenge pro überfahrener Fläche jeder Düsenanordnung gleich ist.

## Beschreibung

Die Erfindung betrifft ein Flüssigkeitsflächenausbringverfahren mit einer fahrenden Flüssigkeitsverteilvorrichtung, Feldspritze oder industrieller Spritzmaschine mit einer Vielzahl von nebeneinander an einem senkrecht zur Arbeitsrichtung vorgesehenen Gestänge angeordneten Düsenanordnungen, wobei die Düsenanordnungen ansteuerbar sind und eine zu überfahrende und zu besprühende Fläche mit einer Flüssigkeit besprühen.

Als fahrende Flüssigkeitsverteilvorrichtung im Sinne dieser Erfindung sind insbesondere Feldspritzen und industrielle Spritzmaschinen zur Verteilung von Flüssigkeiten, wie flüssige Dünge- oder Pflanzenschutzmittel und dgl., zu verstehen. Es handelt sich um Maschinen, mit Hilfe derer die zu verteilende Flüssigkeit auf einer großen Fläche ausgebracht werden kann, wobei die Fläche mit mehreren Fahrten abgedeckt wird.

Aus dem Stand der Technik sind unterschiedliche Anordnungen und Verfahren bekannt, um Flüssigkeiten mittels fahrenden Flüssigkeitsverteilvorrichtungen auszubringen. Hierbei werden insbesondere computergestützte Systeme mit einer satellitengestützten Positionsbestimmung verwendet, um Überlappungen bei den Sprühvorgängen zu vermeiden. Es erfolgt zur Verhinderung einer doppelten Besprühung einzelner Teilbereiche eine Teilbreitenabschaltung von Düsenanordnungen an einem senkrecht zur Arbeitsrichtung angeordneten Spritzgestänge, so dass beim Überstreichen eines bereits besprühten Bereiches dieser Bereich nicht erneut besprüht wird.

Aus der Druckschrift DE 195 04 703 A1 ist ein Verfahren zum Steuern und Regeln von Düsenanordnungen fahrender Verteilmaschinen bekannt, bei dem rechnergestützt die auszubringende Menge an Flüssigkeit je Standort und Fläche eingestellt wird. Hierbei erfolgt insbesondere eine Teilbreiten oder Einzeldüsenabschaltung, so dass keine Flächen doppelt besprüht werden.

Der vorliegenden Erfindung liegt die Aufgabe zugrunde, ein Verfahren aufzuzeigen, das die gleichmäßige Flüssigkeitsaufbringung auf einer Fläche in der Praxis gewährleistet, wobei die Flüssigkeit von einer fahrenden Flüssigkeitsverteilvorrichtung, einer Feldspritze oder industrieller Spritzmaschine ausgebracht wird.

Gelöst wird diese Aufgabe mit einem Flüssigkeitsflächenausbringverfahren gemäß dem Hauptanspruch.

Erfindungsgemäß ist das Flüssigkeitsflächenausbringverfahren mit einer fahrenden Flüssigkeitsverteilvorrichtung, Feldspritze oder industrieller Spritzmaschine mit einer Vielzahl von nebeneinander an einem senkrecht zur Arbeitsrichtung vorgesehenen Gestänge angeordneten Düsenanordnungen, wobei die Düsenanordnungen ansteuerbar sind und eine zu überfahrende und zu besprühende Fläche mit einer Flüssigkeit besprühen, dadurch gekennzeichnet, dass der Fahrtzustand in Bezug auf Geradeaus- und Kurvenfahrt überwacht wird und die Ausbringmenge der einzelnen Düsenanordnungen anhand des Fahrtzustandes Geradeausfahrt und Kurvenfahrt eingestellt wird, wobei bei Detektion einer Geradeausfahrt keine Änderung der Ausbringmenge in Bezug auf den Fahrtzustand erfolgt und bei Detektion einer Kurvenfahrt eine Änderung der Ausbringmenge in Bezug auf den Fahrtzustand erfolgt, so dass die Ausbringmengen der Düsenanordnungen in Abhängigkeit des jeweiligen Düsenanordnungsanbringungsort-abhängigen Kurvenradius angepasst werden, so dass die Ausbringmenge pro überfahrener Fläche jeder Düsenanordnung gleich ist.

Durch dieses Verfahren ist es möglich eine gleichmäßige Flüssigkeitsverteilung über die gesamte Arbeitsbreite zu gewährleisten, obwohl die fahrende Flüssigkeitsverteilvorrichtung leichte Bögen, auch bei gewollter Geradeausfahrt, fährt und Wendemanöver am Ende einer Spur durchführt.

Bei denen im Stand der Technik bekannten Verfahren zur Ansteuerung der Düsenanordnungen einer fahrenden Flüssigkeitsverteilmaschine besteht immer das Problem, dass in Kurvenfahrten und auch schon bei leichten Bögen deutliche Unterschiede in der ausgebrachten Menge an zu verteilender Flüssigkeit bestehen, da auf Grund des breiten Gestänges, an dem die einzelnen Düsenanordnungen angebracht sind erhebliche Geschwindigkeitsunterschiede im Kurveninnenbereich bis hin zum Kurvenaußenbereich bestehen. Es kann bei einer Wende sogar zu negativen Geschwindigkeiten im Kurveninnenbereich des Gestänges kommen, so dass Bereiche mehrfach besprüht werden, was zu erheblichen Beeinträchtigungen führen kann, beispielsweise zu hohe Einbringung von Pflanzenschutzmitteln in einzelne Pflanzen und damit verbundene Belastung dieser Pflanzen.

Durch das hier dargestellte Verfahren bringen die Düsenanordnungen im Innenbereich der Kurve entsprechend der dort anliegenden Geschwindigkeit weniger Flüssigkeit pro Zeit aus als die Düsenanordnungen im Außenbereich der Kurve. Aufgrund der Geschwindigkeitsdifferenzen der einzelnen Düsenanordnungen über dem Boden bei Durchfahrt eines Bogens, Schlenkers oder einer Kurve und dgl., nämlich im Innenbereich eine geringe Geschwindigkeit über Boden und im Außenbereich eine hohe Geschwindigkeit über dem Boden, kommt es ohne eine Ansteuerung der Düsenanordnungen zu einer stark unterschiedlichen Besprühung mit der zu verteilenden Flüssigkeit. Erfindungsgemäß erfolgt nunmehr eine gleichmäßige Besprühung bei Kurvenfahrt über die gesamte Gestängebreite, da die einzelnen Mengen der Düsenanordnungen entsprechend der an den Düsenanordnungen anliegenden Geschwindigkeiten über dem Boden eingestellt werden.

Zur Veränderung der Ausbringmenge wird der Druck an den einzelnen Düsenanordnungen oder Gruppen von Düsenanordnungen angepasst. Dies kann durch Druckerhöhungsstufen in den Leitungen realisiert werden, wobei dies für einzelne Abschnitte erfolgt, so dass die Gestängebreite in mehrere Segmente unterteilt wird, an denen unterschiedliche Flüssigkeitsdrücke anliegen. Im Kurveninnenbereich des Gestänges werden die Drücke reduziert und im Kurvenaußenbereich des Gestänges werden die Drücke erhöht.

Weiter können zur Veränderung der Ausbringmenge an den Düsenanordnungen ein Düsenwechsel bei Einzeldüsennutzung und/oder eine gleichzeitige Ansteuerung mehrerer Einzeldüsen der Düsenanordnung erfolgen. Hierdurch kann eine Kombination von mehreren Einzeldüsen in einem Düsenstock / -magazin der Düsenanordnung zusammengeschaltet werden, so dass die Flüssigkeit an der jeweiligen Düsenanordnung insgesamt der richtigen Menge entspricht. Die Einzeldüsen haben hierzu unterschiedliche Ausgestaltungen in Bezug auf deren Durchflussmenge, so dass mehrere Stufen durch unterschiedliches Zusammenschalten realisiert werden können.

### Düsenbeispiel: Ausbringmenge 200I / ha bei einer Geschwindigkeit von 10 km/h

| | | | |
|---|---|---|---|
| Ausgewählte Düse | Düse ID03 | 6 bar- 1,68 l/min = | 100 % |
| Zuschaltung | Düse ID01 | 6 bar - 0,55 l/min = | 133 % |
| Zuschaltung | Düse ID015 | 6 bar - 0,83 l/min = | 149 % |
| | | | |
| Umschaltungsdüse | Düse ID04 | 6 bar - 2,23 l/min = | 133 % |

Zur Veränderung der Ausbringmenge erfolgt weiter eine Verstellung der Düse oder der Düsen in der Düsenanordnung. Hierzu sind die Düsen in deren Durchflussmenge einstellbar.

Insgesamt können somit einerseits die Durchflussmengen in den Zuleitungen links und rechtsseitig der Gestängezentralaufhängung unterschiedlich eingestellt werden und andererseits die Düsenanordnungen mit individuellen Ausbringmengen angesteuert werden, um auf diese Weise bei Kurvenfahrt die gleiche Menge Flüssigkeit pro Fläche auszubringen.

Zur Bestimmung des Fahrtzustandes wird die Fahrzeugbewegung überwacht, wobei hierzu Kurvenfahrtsensoren, Gyroskop, Spursensor, Neigungssensor und/oder Parallelitätssensoren ausgewertet werden. Eine Kurvenfahrt kann so während des laufenden Sprühvorgangs detektiert werden und in situ die Ausbringmengen der einzelnen Ausbringdüsenanordnungen angepasst werden, da nur relativ geringe Latenzzeiten anstehen.

Zur Bestimmung des Fahrtzustandes werden Positionsdaten der fahrenden Flüssigkeitsverteilvorrichtung, insbesondere über ein satellitengestütztes Ortungssystem, verwendet. Es kann die zeitliche Veränderung der Fahrzeugposition zur Bestimmung des Richtungsvektors und dessen Veränderung verwendet werden.

Zur Bestimmung des Fahrtzustandes wird ferner die geplante Fahrtroute unter Beachtung des aktuellen Standortes verwendet, um auf diese Art bereits vor Beginn einer Kurvenfahrt eine entsprechende Regelung zur Ansteuerung vorzunehmen.

Bei Bestimmung des Fahrtzustandes Kurvenfahrt wird weiter ein frei aufgehängtes Gestänge durch Ansteuerung von Aktoren stabilisiert, so dass der Abstand des Gestänges zum Boden über die gesamte Länge der Gestängeanordnung bei Kurvenfahrt gleich ist. Dieses Ansteuern des Gestänges kann selbstverständlich auch ohne die hier beanspruchte Idee an Flüssigkeitsverteilfahrzeugen mit einem entsprechenden Gestänge verwendet werden.

Zur Regelung des Gestänges können die Aktoren derart angesteuert werden, dass diese der Fliehkraft bei Kurvenfahrt entgegenwirken, so dass das Gestänge an jeder Stelle den gleichen Abstand zum Boden aufweist, um auf diese Weise die gleiche Fläche zu besprühen.

Ein frei aufgehängtes Spritzgestänge ist bei Geradeausfahrt sehr vorteilhaft, da es sich selbst nivelliert. Bei anstehender Kurvenfahrt kann das Gestänge auch starr gestellt werden, wozu die Aktoren entsprechend angesteuert werden.

Nachfolgend ist eine Tabelle mit einem exemplarischen Ausführungsbeispiel mit Berechnung der Ausbringmengen dargestellt, so dass eine ausreichend gleichmäßige Besprühung in Kurvenfahrt möglich ist.

Ein 36 Meter breites Spritzgestänge ist in 12 Teilbreiten (TB) unterteilt, wobei die Teilbreiten unterschiedliche Breiten aufweisen. Bei einem Spurradius von 25 Meter sind die auszubringenden Leistungen bei gleicher Düsenausgestaltung entsprechend 34 % - 55 % - 88 % - 124 % - 151 % und 166 %.

Die Parameter, nach denen die auszubringende Menge angepasst wird, sind die Arbeitsbreite, der Radius der Kurve sowie die Geschwindigkeit.

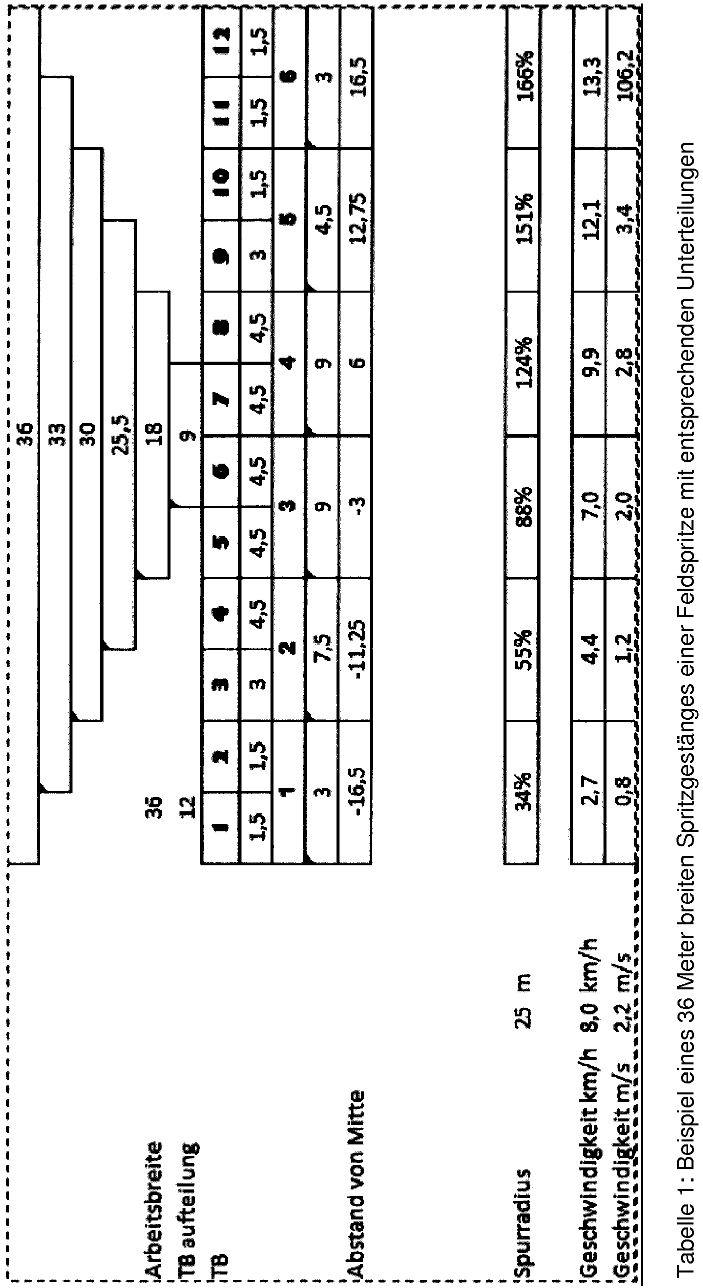

Nachfolgend werden Ausführungsbeispiele der Erfindung anhand der beiliegenden Zeichnungen detailliert beschrieben.

Darin zeigen:
- Fig.1: eine schematische Darstellung eines Fahrbeispiels einer Feldspritze an einer Zugmaschine mit an der Feldspritze angeordnetem und ausgefahrenem Spritzgestänge, wobei eine 180° Kurve abgefahren wird;
- Fig. 2: eine schematische Darstellung eines ersten Flächenabschnittes, der von einer fahrenden Flüssigkeitsverteilvorrichtung auf der Fahrlinie abgefahren werden soll;
- Fig. 3: eine schematische Darstellung eines zweiten Flächenabschnittes, der von einer fahrenden Flüssigkeitsverteilvorrichtung auf der Fahrlinie abgefahren werden soll;
- Fig.4: eine schematische Darstellung eines dritten Flächenabschnittes mit zwei Hindernissen, der von einer fahrenden Flüssigkeitsverteilvorrichtung auf der Fahrlinie abgefahren werden soll;
- Fig. 5: eine schematische Darstellung eines vierten Flächenabschnittes mit einem Hindernis, der von einer fahrenden Flüssigkeitsverteilvorrichtung auf der Fahrlinie abgefahren werden soll;
- Fig. 6: eine schematische Darstellung eines fünften Flächenabschnittes, der von einer fahrenden Flüssigkeitsverteilvorrichtung auf der Fahrlinie abgefahren werden soll und
- Fig.7: eine schematische Darstellung eines kreisförmigen Flächenabschnittes, der von einer fahrenden Flüssigkeitsverteilvorrichtung auf der Fahrlinie abgefahren werden soll.

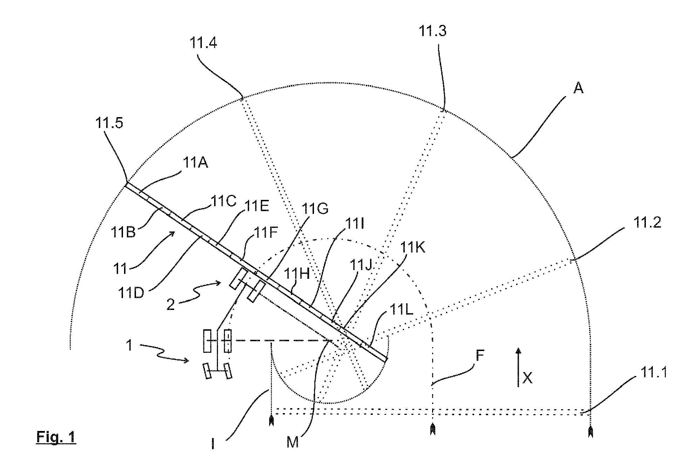

In **Fig. 1** ist eine schematische Darstellung eines Fahrbeispiels einer Feldspritze 2 an einer Zugmaschine 1 mit an der Feldspritze 2 angeordnetem und ausgefahrenem Spritzgestänge 11, wobei eine 180° Kurve abgefahren wird, dargestellt. Exemplarisch fährt eine mit einem 30 m breiten Spritzgestänge 11 ausgerüstete Feldspritze 2 an einer Zugmaschine 1 einen Kurvenradius von 10 m, also 20 m Durchmesser.

Der Drehpunkt M stellt den Mittelpunkt der zu fahrenden Kreisbahn, nämlich der Fahrlinie F dar. Die Zugmaschine 1 mit der Feldspritze 2 bewegt sich in Bewegungsrichtung X, der Arbeitsrichtung. Nach dem Wendemanöver bewegt sich die Zugmaschine 1 mit der Feldspritze in Richtung -X und fährt die nächste Teilbahn eines Feldes ab.

Das Spritzgestänge 11 mit den daran angeordneten und zur besseren Veranschaulichung hier nicht weiter dargestellten ansteuerbaren Ausbringdüsen ist hierbei quer zur Arbeitsrichtung angeordnet. Durch die Kurvenfahrt fährt die Innenseite des Spritzgestänges 11, in Fahrtrichtung links, die Spritzgestänge Innenspurlinie I ab. Die Außenseite des Spritzgestänges 11, in Fahrtrichtung rechts, fährt die Spritzgestänge Außenspurlinie A ab. Es ist deutlich erkennbar, dass die Innenspurlinie I und die Außenspurlinie A deutlich unterschiedliche Längen aufweisen, so dass die Geschwindigkeit auf der Außenspurlinie A deutlich höher ist als die der Innenspurlinie I.

Aufgrund des Geschwindigkeitsunterschiedes bedarf es nunmehr einer deutlich höheren Spritzleistung auf der Außenseite A des Spritzgestänges 11 als auf der Innenseite I des Spritzgestänges 11.

Die einzelnen Positionen des Spritzgestänges im zeitlichen Ablauf, nämlich 11.1 bis 11. 5 zeigen die Position des Spritzgestänges 11 während der Kurvenfahrt. Es ist zu erkennen, dass sogar im Bereich nahe des Mittelpunktes M sogar eine Rückwärtsbewegung des inneren Teils des Spritzgestänges 11 erfolgt, so dass eine Doppelbesprühung hier verhindert werden muss. Hierzu erfolgt eine Abschaltung von Teilbreiten 11L sowie 11 K, zumindest abschnittsweise. Alternativ können auch einzelne Düsenanordnungen entsprechend geschaltet werden.

Das Spritzgestänge 11 ist in 12 Segmentabschnitte 11A bis 11L aufgeteilt, die einzeln ansteuerbar sind. Entsprechend der beispielhaften Tabelle 1 weiter oben, werden unterschiedliche Mengen an Flüssigkeit in den einzelnen Abschnitten ausgebracht, um so auch bei Kurvenfahrt die gleiche Menge an Flüssigkeit pro Fläche auszubringen.

Im Weiteren werden für gleiche Elemente die gleichen Bezugszeichen wie in Fig. 1 verwendet. Zu dem prinzipiellen Funktionsprinzip bzw. Ablauf wird auf Fig. 1 verwiesen.

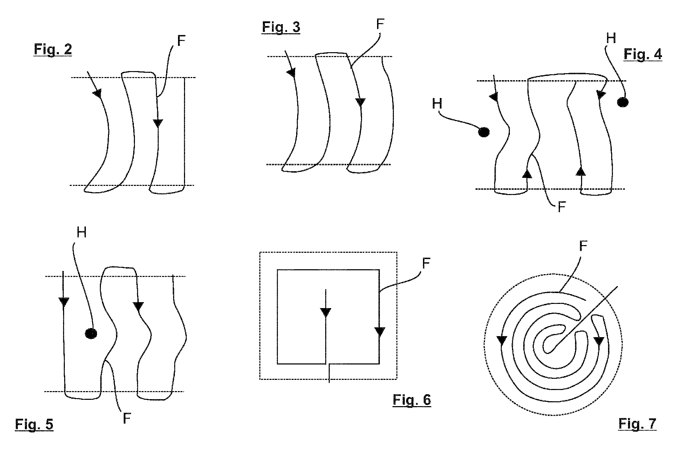

Nachfolgend sind sechs Ausführungsbeispiele (Fig. 2 bis 7) dargestellt, in denen unterschiedliche Fahrszenarien abgebildet sind.

In **Fig. 2** ist eine schematische Darstellung eines ersten Flächenabschnittes dargestellt, der von einer fahrenden Flüssigkeitsverteilvorrichtung auf der Fahrlinie F abgefahren werden soll.

Hierbei wird zunächst eine Kurvenfahrt getätigt, die dann allmählich in eine Geradeausfahrt übergeht. Es bedarf somit unterschiedlicher Einstellungen aufgrund des sich ändernden Kurvenradius in Bezug auf die Ausbringmengen. Die Kontur / Fahrlinie F wird allmählich geglättet.

**Fig.3** zeigt eine schematische Darstellung eines zweiten Flächenabschnittes, der von einer fahrenden Flüssigkeitsverteilvorrichtung auf der Fahrlinie F abgefahren werden soll.

Die Fahrlinie F besteht aus nacheinander abzufahrenden identischen Konturen F, wobei diese sich jedoch einmal als Rechtskurve und im Anschluss als Linkskurve und wieder andersherum darstellen. Es bedarf daher eines Wechsels der Ansteuerung der linken und rechten Seite des Gestänges 11.

**Fig. 4** zeigt eine schematische Darstellung eines dritten Flächenabschnittes mit zwei Hindernissen H, der von einer fahrenden Flüssigkeitsverteilvorrichtung auf der Fahrlinie F abgefahren werden soll.

Die zwei Hindernisse H, beispielsweise ein Teich, ein Wasserloch, ein Baum oder ein Strommast, behindern die einfache Geradeausfahrt, so dass mehrere langgezogene Kurvenfahrten definiert werden, die abgefahren werden müssen.

In **Fig. 5** ist eine schematische Darstellung eines vierten Flächenabschnittes mit einem Hindernis H dargestellt, der von einer fahrenden Flüssigkeitsverteilvorrichtung auf der Fahrlinie F abgefahren werden soll.

Aus einer Geradeausfahrt am Anfang entwickelt sich bedingt durch das Hindernis eine Kurvenfahrt, die eine Regelung der Ausbringmenge mit sich bringt.

**Fig. 6** zeigt eine schematische Darstellung eines fünften Flächenabschnittes, der von einer fahrenden Flüssigkeitsverteilvorrichtung 1+2 auf der Fahrlinie F abgefahren werden soll.

Hierbei sind mehrere 90° Kurven zu fahren, in denen im Innenbereich fast eine Abschaltung erfolgt und im Außenbereich ein erheblicher Mehraufwand an Flüssigkeit benötigt wird, um die gleiche Flüssigkeitsmenge pro Fläche auszubringen.

In **Fig. 7** ist eine schematische Darstellung eines kreisförmigen Flächenabschnittes dargestellt, der von einer fahrenden Flüssigkeitsverteilvorrichtung 1+2 auf der Fahrlinie F abgefahren werden soll.

Hierbei werden die Flüssigkeitsmengen von einer Spur zur nächsten und in den Wendepunkten neu eingeregelt, damit pro Fläche die gleiche Menge aufgebracht wird.

### Bezugszeichenliste

- 1: Zugmaschine
- 2: Feldspritze
- 11: Spritzgestänge mit ansteuerbaren Ausbringdüsen
- 11A bis 11L: Segmentabschnitt, Teilbreite (12 Unterteilungen)
- 11.1: Spritzgestänge, Position 1
- 11.2: Spritzgestänge, Position 2
- 11.3: Spritzgestänge, Position 3
- 11.4: Spritzgestänge, Position 4
- 11.5: Spritzgestänge, Position 5

- H: Hindernis
- M: Drehpunkt
- A: Spritzgestänge Außenspurlinie
- F: Fahrlinie
- I: Spritzgestänge Innenspurlinie
- X: Bewegungsrichtung

## Patentansprüche

1. Flüssigkeitsflächenausbringverfahren mit einer fahrenden Flüssigkeitsverteilvorrichtung, selbstfahrende oder gezogene Feldspritze (1, 2) oder industrieller Spritzmaschine mit einer Vielzahl von nebeneinander an einem senkrecht zur Arbeitsrichtung vorgesehenen Gestänge (11) angeordneten Düsenanordnungen, wobei die Düsenanordnungen ansteuerbar sind und eine zu überfahrende und zu besprühende Fläche mit einer Flüssigkeit besprühen,
**dadurch gekennzeichnet, dass**
der Fahrtzustand in Bezug auf Geradeaus- und Kurvenfahrt überwacht wird und die Ausbringmenge der einzelnen Düsenanordnungen anhand des Fahrtzustandes Geradeausfahrt und Kurvenfahrt eingestellt wird, wobei
- bei Detektion einer Geradeausfahrt keine Änderung der Ausbringmenge in Bezug auf den Fahrtzustand erfolgt
und
- bei Detektion einer Kurvenfahrt eine Änderung der Ausbringmenge in Bezug auf den Fahrtzustand erfolgt, so dass die Ausbringmengen der Düsenanordnungen in Abhängigkeit des jeweiligen Düsenanordnungsanbringungsort-abhängigen Kurvenradius angepasst werden, so dass die Ausbringmenge pro überfahrener Fläche jeder Düsenanordnung gleich ist.

2. Flüssigkeitsflächenausbringverfahren nach Anspruch 1,
**dadurch gekennzeichnet, dass**
zur Veränderung der Ausbringmenge der Druck an den einzelnen Düsenanordnungen oder Gruppen von Düsenanordnungen angepasst wird.

3. Flüssigkeitsflächenausbringverfahren nach Anspruch 1 oder 2,
**dadurch gekennzeichnet, dass**
zur Veränderung der Ausbringmenge an den Düsenanordnungen ein Düsenwechsel bei Einzeldüsennutzung und/oder eine gleichzeitige Ansteuerung mehrerer Einzeldüsen der Düsenanordnung erfolgt.

4. Flüssigkeitsflächenausbringverfahren nach Anspruch 1, 2 oder 3,
**dadurch gekennzeichnet, dass**
zur Veränderung der Ausbringmenge eine Verstellung der Düse oder der Düsen in der Düsenanordnung erfolgt.

5. Flüssigkeitsflächenausbringverfahren nach einem der Ansprüche 1 bis 4,
**dadurch gekennzeichnet, dass**
zur Bestimmung des Fahrtzustandes die Fahrzeugbewegung überwacht wird, wobei hierzu Kurvenfahrtsensoren, Gyroskop, Spursensor, Neigungssensor und/oder Parallelitätssensoren ausgewertet werden.

6. Flüssigkeitsflächenausbringverfahren nach einem der Ansprüche 1 bis 5,
**dadurch gekennzeichnet, dass**
zur Bestimmung des Fahrtzustandes Positionsdaten der fahrenden Flüssigkeitsverteilvorrichtung, insbesondere über ein satellitengestütztes Ortungssystem, bestimmt werden und deren zeitliche Veränderung zur Bestimmung des Richtungsvektors verwendet werden.

7. Flüssigkeitsflächenausbringverfahren nach einem der vorangehenden Ansprüche,
**dadurch gekennzeichnet, dass**
zur Bestimmung des Fahrtzustandes die geplante Fahrtroute unter Beachtung des aktuellen Standortes verwendet wird.

8. Flüssigkeitsflächenausbringverfahren nach einem der vorangehenden Ansprüche,
**dadurch gekennzeichnet, dass**
bei Bestimmung des Fahrtzustandes Kurvenfahrt ein frei aufgehängtes Gestänge durch Ansteuerung von Aktoren stabilisiert wird, so dass der Abstand des Gestänges zum Boden über die gesamte Länge der Gestängeanordnung gleich ist.
